# EUROPEAN PATENT APPLICATION

(11) **EP 3 597 357 A1**
(43) Date of publication of application: **22.01.2020**
(21) Application number: 18184130.5
(22) Date of filing: 18.07.2018
(51) Int. Cl.: B23P 19/00, B25B 27/00

(54) **BLIND RIVET NUT SETTING DEVICE**

(71) Applicant: Newfrey LLC, New Britain, CT 06053 (US)
(72) Inventor: Schneider, Manuel, 35394 Gießen (DE); Gianferrara, Paul, 35394 Gießen (DE)
(74) Representative: SBD IPAdmin

(57) **Abstract**

Method for setting a blind rivet nut (20) in a workpiece (32) and blind rivet nut setting device (10) comprising:
- a housing (12) having a nose (14) defining a longitudinal axis (X),
- a linear actuator (16) fixed to the housing (12),
- a feeding assembly (18) comprising a feeding channel adapted to receive a blind rivet nut (20) provided with an internal thread, wherein an end of the channel cooperates with the nose,
- a load assembly (22) cooperating with the linear actuator (16), wherein the load assembly extends along the longitudinal axis and is adapted to emerge out of the housing through the nose, wherein the load assembly comprises a threaded insert (40) having a shank (42) with an external threaded portion,
wherein the shank (42) is a hollow shank defining an internal aperture and the shank is movable between engaged positions and release positions, wherein in the engaged positions the threaded portion is adapted to cooperate with the internal thread of the blind rivet nut (20), wherein in the release positions, the threaded portion is adapted to extend at a non-zero distance from the internal thread of the blind rivet nut and the shank (42) can be removed from the blind rivet nut.

## Description

The present invention is directed to a blind rivet nut setting device and a method for setting a blind rivet nut in a workpiece. More particularly, the blind rivet nut setting device comprises a housing having a nose defining a longitudinal axis, a linear actuator fixed to the housing, a feeding assembly comprising a feeding channel adapted to receive a blind rivet nut provided with an internal thread, wherein an end of the channel cooperates with the nose, and a load assembly cooperating with the linear actuator, wherein the load assembly extends along the longitudinal axis and is adapted to emerges out of the housing through the nose, wherein the load assembly comprises a threaded insert having a shank with an external threaded portion.

In motor vehicle manufacture it is usual that various components such as strips, rails, equipment etc. are fastened to thin-walled components, such as sheet metal or profiles of aluminium, for example. A common method of connecting components is to use a fastener having a screw thread.

Blind rivet nuts are fastening elements that are to be arranged in an opening, for example, in a through hole of a metal sheet or any other sheet or workpiece. The blind rivet nuts thereby provide an internal thread and thus render possible a screw connection to metal sheets or workpieces, the wall thickness of which is not sufficient to embody a thread. A blind rivet nut setting device is used to set the blind rivet nut in the opening of the workpiece. The blind rivet nut has, in a non-deformed state, a hollow cylindrical rivet shank at the one end of which a radially extending set head is embodied and on the other end of which an internal thread is formed.

It is known to use a bolt having an external thread cooperating with the internal thread of the blind rivet nut to set the blind rivet nut in the hole. The internal thread of the blind rivet nut engages with the external thread of the bolt. The blind rivet nut is inserted with the rivet shank first into the hole until the rivet head contacts the sheet. By start-up of the blind rivet nut setting device, the bolt and thus the thread region are then moved axially backwards from the blind rivet nut and the sheet, whereby a compression of the rivet shank occurs. A bead or a bulge is formed at a desired deformation point at the workpiece side facing away from the rivet head. The blind rivet nut is thus held captively in the hole (or opening).

To remove the blind rivet nut setting device from the set blind rivet nut, pressure on the bolt is relieved and it is rotated in the drill-off direction. The blind rivet nut setting device is then available for a new setting operation.

Document EP0886733 for instance discloses a setting device for blind rivet nuts comprising a first actuator adapted to guide along a longitudinal axis the blind rivet nut and a second actuator adapted to rotate the bolt or threaded insert, notably to remove the bolt from the blind rivet nut after the setting step (in other words after the crimping of the blind rivet nut). The implementation of two actuators implies a massive setting tool and the programming of the two actuators.

Document US7346970 discloses a setting device for blind rivet nuts having a single electric motor with a drive shaft that is positioned in a first housing part and is connected via a transmission means to a tool housing part. The tool housing part is laterally offset relative to the drive shaft and extends in parallel with the drive shaft. A tool shaft is arranged in the tool housing part and has non-rotationally connected thereto a screw type tool which projects from the front end of the tool housing part. Locking means to which the tool housing part and the tool shaft can be coupled together in non-rotational fashion, or decoupled, anti-rotation means with which the tool shaft can be blocked against rotation or can be released for rotation are also provided. Spindle means creates a relative axial movement between the tool shaft with the tool and the tool housing part when the tool shaft is blocked against rotation.

Such setting tools may be cumbersome and needs a minimum time to perform all the steps and motions needed to perform the crimping and then become available for the next setting operation. Indeed, in both cases a rotation of the bolt or the threaded insert is needed to assemble and disassemble the blind rivet nut set in the hole of a workpiece and the threaded insert or bolt.

It is hence an object of the present invention to at least alleviate the aforementioned shortcomings. More particularly one objective of the present invention is to provide a blind rivet nut setting device which is of a simple design, reliable and allowing a fast setting of bling rivet nuts in order to cut down on production time.

To this aim, according to the invention, it is provided a blind rivet nut setting device as mentioned above characterized in that the shank is a hollow shank defining an internal aperture and the shank is movable between engaged positions and release positions, wherein in the engaged positions the threaded portion is adapted to cooperate with the internal thread of the blind rivet nut, wherein in the release positions, the threaded portion is adapted to extend at a non-zero distance from the internal thread of the blind rivet nut and the shank can be removed from the blind rivet nut.

The shank of the threaded insert is movable between two positions, one allowing to engage the internal thread of a blind rivet nut, the other allowing to insert or release the threaded insert from the blind rivet nut without the need of a rotation. Thus, such setting device comprises only one linear actuator and is therefore compact. Besides, the fact to have only a translation motion to set the blind rivet nut allows to cut down the time needed to perform a setting step. The setting device is able to considerably reduce the manufacturing time, since there is no need any more to rotate the threaded insert to fix it to the blind rivet nut.

According to an embodiment, the load assembly further comprises a load pin adapted to extend in the aperture of the shank, and the load pin is movable in the aperture such as to move the shank between the release positions and the engaged positions. Thus the expansion of the shank is mechanically realised through the load pin. The mechanism to move the shank between the release and engaged positions is easy to implement. In another embodiment, the shank could be made with a scissor mechanism (for example shears fingers) adapted to move between the release and engaged positions.

According to an embodiment, the load pin and the threaded insert are both driven by the linear actuator. Besides, with the corresponding arrangement, the load pin and the threaded insert may be driven independently with the same linear actuator.

According to an embodiment, the shank comprises a slot, which allows the shank to be moved between the release positions and the engaged positions.

According to an embodiment, the shank is a split hollow shank. For instance, the shank comprises two slots such that the hollow shank comprises a first latch (or first casing) and a second latch (or second casing).
For example, the shank comprises two half-shells which allows the shank to be moved between the release positions and the engaged positions. More particularly, the shank may consist of two half/shelves. Thus, the shank can be elastically deformable between the release and engaged position. However, in other embodiments, the shank can be made in an elastic material allowing an elastic deformation between the engaged and the release positions.

According to an embodiment, the slots are facing each other such that the pitch of the thread is consistent over the complete length of the shank, when the shank is in the engaged position. The pitch of the shank now can match the pitch of a blind rivet nut.

According to an embodiment, the nose comprises a receiving portion provided with receiving fingers equally distributed around the longitudinal axis.

According to an embodiment, the receiving fingers are elastic allowing an elastic springback and are adapted to guide the blind rivet nut in the nose to allow the load assembly to cooperate with the blind rivet nut.

According to an embodiment, the nose comprises an active closure to open and close the feeding channel. The closure opens when the load assembly is situated in the nut holding position. The receiving fingers open elastically when the load assembly moves forward through and close when it moves back.

According to an embodiment, the nose comprises press fingers, and wherein the press fingers comprises an abutment surface. The abutment surface is adapted to contact the rivet head during the crimping process to maintain the rivet head in position and enable the shank to be deformed to form a bulge.

According to an embodiment, the press fingers each comprises a free end provided with the abutment surface, and the abutment surface extends sensibly perpendicular to the longitudinal axis.

According to an embodiment, the nose comprises a funnel shape. The funnel shape allows an easy positioning and centring of the blind rivet nut along the longitudinal axis. More particularly the receiving fingers form the funnel shape.

According to an embodiment, the linear actuator comprises a shaft extending along the longitudinal axis, said shaft being movable along the longitudinal axis in a first direction and in a second direction, opposite the first direction, wherein the threaded insert cooperates with the shaft, such that the shaft can drive the threaded insert along the longitudinal axis in the first direction and in the second direction. More particularly the linear actuator is adapted to drive the threaded insert and/or the load pin at least partially independently.

According to an embodiment, the feeding channel is shifted from the longitudinal axis. The blind rivet nut setting device allows the feeding channel to be not arranged along the longitudinal axis and a side feeding of the blind rivet nut. In otherwords, the feeding channel does not need to be and is not in-line with the longitudinal axis.

According to an embodiment, the actuator is an electric actuator. The electric actuator can easily be controlled, and the axial forces provided are sufficient to enable the crimping.

The present invention is further directed to a method for setting a blind rivet nut in a workpiece, comprising:
- providing a blind rivet nut setting device comprising a housing having a nose defining a longitudinal axis, a linear actuator fixed to the housing, a feeding assembly comprising a feeding channel, wherein an end of the channel cooperates with the nose, a load assembly cooperating with the linear actuator, wherein the load assembly extends along the longitudinal axis and is adapted to emerges out of the housing through the nose, wherein the load assembly comprises a threaded insert having a shank with an external threaded portion, wherein the shank is a hollow shank defining an internal aperture and the shank is elastically movable between engaged positions and release positions;
- providing a blind rivet nut comprising a rivet shank with an internal thread and a rivet head;
- feeding the blind rivet nut in the feeding assembly, such that the blind rivet nut moves through the feeding channel to the nose;
- retaining the blind rivet nut in the nose such that the blind rivet nut is in a loading position;
- guiding the threaded insert with the linear actuator in a first direction along the longitudinal axis into the blind rivet nut with the shank in a release position;
- moving the shank from the release position to an engaged position, such that the threaded portion engages the internal thread;
- guiding the load assembly with the linear actuator further in the first direction along the longitudinal axis such as to release the blind rivet nut from the nose;
- guiding the blind rivet nut with the linear actuator through a hole of a workpiece until the head contacts the workpiece and at least a portion of the shank extends in the hole;
- deforming the blind rivet nut through a displacement of the load assembly in a second direction, opposite the first direction, with the shank in the engaged position such as to perform a crimping process of the blind rivet nut;
- moving the shank from the engaged position to the release position;
- guiding the threaded insert with the linear actuator in the second direction along the longitudinal axis to release the blind rivet nut from the threaded insert.

Such method is easy to implement. Only one linear actuator and some pneumatic actuators are needed to undertake all the steps from loading the blind rivet nut to crimping said blind rivet nut. Besides, only translation motions can easily be controlled and determined. Thus, such method allows a better control of the setting with a reduced setting time.

According to an embodiment, the nose comprises press fingers and the method further comprises a step of preloading the blind rivet nut against the press fingers in order to ensure a defined starting position for deforming the blind rivet nut.

According to an embodiment, the load assembly further comprises a load pin, wherein the load pin cooperates with the threaded insert and extends in the aperture of the shank to move the shank from a release position to an engaged position.

According to an embodiment, the method further comprises a step of guiding the load pin in the first direction along the longitudinal axis within the aperture and a step of guiding the load pin in the second direction along the longitudinal axis outside of the aperture.

Other characteristics and advantages of the invention will readily appear from the following description of embodiments, provided as non-limitative examples, in reference to the accompanying drawings.

In the drawings:
Fig. 1 shows a schematic perspective view of a blind rivet nut setting machine comprising a housing, a linear actuator, a feeding assembly and a load assembly;
Fig. 2 shows the blind rivet nut setting device of Fig. 1 in sectional view, the blind rivet nut setting device being in a loading position with a blind rivet nut in a nose of the housing;
Fig. 3 shows a sectional view of the detail III of Fig. 2 with the blind rivet nut in the nose of the housing;
Fig. 4 shows a sectional view of the nose of the housing and the load assembly cooperating with the blind rivet nut in a release position;
Fig. 5 shows a sectional view of the detail V of Fig. 4 with the load assembly cooperating with the blind rivet nut in a release position;
Fig. 6 shows a sectional view of the blind rivet setting device of Fig. 1 in front of a workpiece comprising a through hole with the load assembly cooperating with the blind rivet nut in an engaged position;
Fig. 7 shows a sectional view of the detail VII of Fig. 6 with the load assembly cooperating with the blind rivet nut in an engaged position and a closure mechanism in a close position;
Fig. 8 shows a sectional view of the detail represented in Fig. 7 with the closure mechanism in the open position;
Fig. 9 is a detailed front view of the closure mechanism of Fig. 8 in the open position;
Fig. 10 shows a detailed sectional view of the nose with the load assembly cooperating with the blind rivet nut in an engaged position and arranged outside the housing;
Fig. 11 shows a sectional detailed view of the nose with the load assembly cooperating with the blind rivet nut in an engaged position and arranged outside the housing, wherein the blind rivet nut contacts the nose of the housing;
Fig. 12 shows a sectional view of the blind rivet setting device of Fig. 1 with the blind rivet nut and the load assembly emerging from the housing, wherein the blind rivet nut extends in a hole of a workpiece;
Fig. 13 shows a sectional view of the detail XIII of Fig. 12 with the blind rivet nut extending in a hole of a workpiece;
Fig. 14 shows a detailed sectional view of the nose and the workpiece with the blind rivet nut after the crimping step;
Fig. 15 shows a detailed sectional view of the nose after the crimping step with the load assembly cooperating with the blind rivet nut in a release position;
Fig. 16 shows the blind rivet nut setting device of Fig. 1 in sectional view after a crimping step, the blind rivet nut setting device being in a rest position and adapted to receive a new blind rivet nut.

On the different figures, the same reference signs designate identical or similar elements.

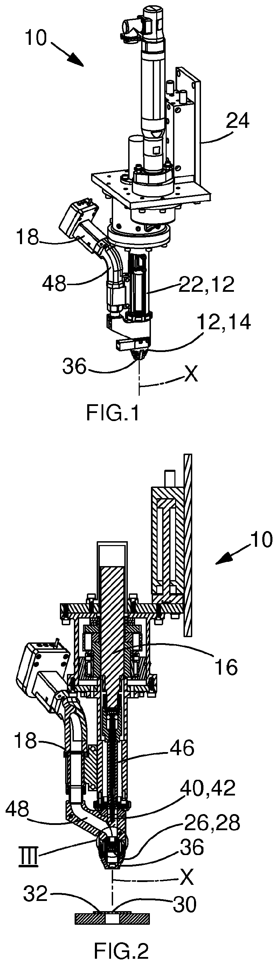

The figures schematically show a blind rivet nut setting device 10. As illustrated in fig. 1, the blind rivet nut setting device 10 comprises a housing 12 with a nose 14, a linear actuator 16, a feeding assembly 18 adapted to drive a blind rivet nut 20 to the nose 14 and a load assembly 22 adapted to cooperate with the blind rivet nut 20 to perform a crimping step.

The housing 12 is adapted to be attached to an arm of a robot. In another embodiment, the housing 12 is fixed to a support through a slide 24 adapted to translate the housing 12. The slide can be actuated by an actuator.

The nose 14 defines a longitudinal axis X. The nose 14 comprises a nose body and a receiving portion 26 provided with receiving fingers 28 equally distributed around the longitudinal axis.

The receiving portion 26 is arranged within the nose 14 body. The receiving portion 26 is adapted to receive a blind rivet nut.

Typically a blind rivet nut 20 comprises a hollow rivet shank with an internal thread and a rivet head outwardly extending from the rivet shank at one end of the shank. The rivet shank is adapted to be arranged in a hole 30 of a workpiece 32 and the rivet head to contact a surface of the workpiece. The rivet shank is adapted to be deformed by the blind rivet nut setting device such has to form a crimping bulge 34 on the underside of the workpiece 32.

The nose 14 comprises a funnel shape. More particularly the receiving fingers 28 form a funnel. The receiving fingers 28 are elastic and thus they allow an elastic springback. The receiving fingers 28 are adapted to retain the blind rivet nut 20. The receiving fingers 28 extend in a finger direction which is angled with regard to the longitudinal axis X, the angle being between 5 and 85 degrees, or more particularly between 10 and 40 degrees. The receiving fingers 28 may be made of spring steel or plastic material.
The nose 14 further comprises press fingers 36. The press fingers 36 are for instance arranged outside of the nose body and are movable between an open position and a close position. In the open position the blind rivet nut, and more particularly the head of a blind rivet nut may extend out of the press fingers and of the nose 14. The press fingers 36 may be rotatably attached to the nose 14 body such that when a determined force is applied on the press fingers, they open in the open position and the blind rivet nut can go through the nose 14. Once the blind rivet nut is outside the nose 14, the press fingers 36 can elastically return in the close position. The free end of the press fingers comprises an abutment portion or abutment surface 38. The abutment surface 38 extends in a direction sensibly orthogonal to the longitudinal axis X. The abutment surface 38 is adapted to contact the rivet head of a blind rivet nut, in order to maintain the blind rivet nut in position during the deformation of the rivet shank during the crimping process.

Between the press fingers 36 and the receiving fingers 28, a closure mechanism 37 may be provided. The closure mechanism 37 is arranged below the receiving fingers 28 and is adapted to move between a close and an open position. In the close position, the closure mechanism does not allow a blind rivet nut to reach the press fingers, wherein in the open position the blind rivet nut can freely reach the press fingers. The closure mechanism, as illustrated, comprises two blades 371, 372 adapted to open and close. The blades 371, 372 can for instance open and close on an iris diaphragm concept. The blades are straight or rounded (as illustrated). For example, a lever is provided to transmit to a blade a rotational motion.

The blades of the closure mechanism are closed in a rest position. For instance, a spring can be provided to elastically close the blades. The closure mechanism opens (and more particularly, the blades open to release a blind rivet nut) when a load is applied to the closure mechanism (or the blades). Under an external load, the blades open and the closure mechanism can release a blind rivet nut, which can be further guided through the press fingers.

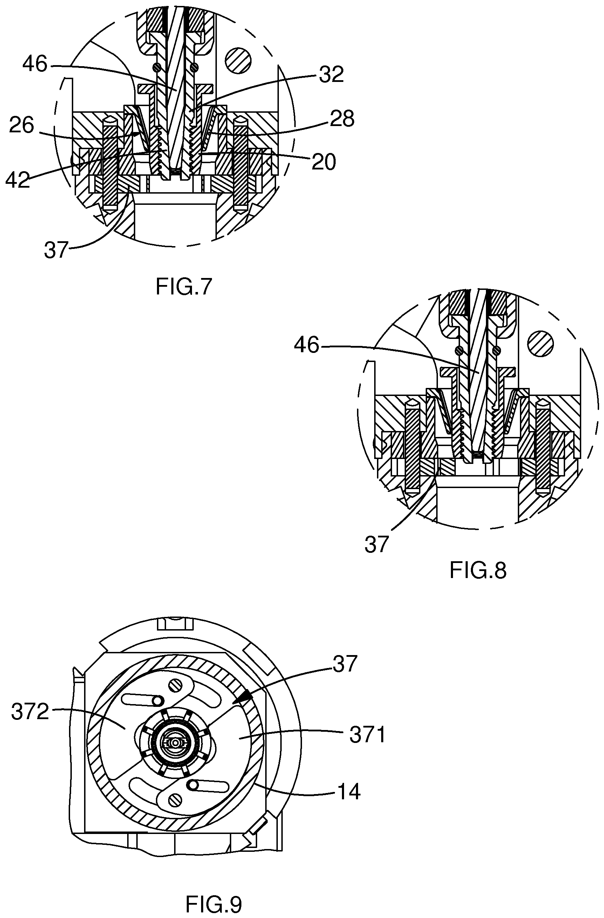

Fig. 9 illustrates more particularly the closure mechanism 37 in the open position with the blades 371, 372 retracted against a housing H such that they open an opening to allow the blind rivet nut to be further driven.

The load assembly 22 extends along the longitudinal axis X and is adapted to emerge out of the housing 12 through the nose 14. The load assembly 22 comprises a threaded insert 40 having a shank 42 with an external threaded portion. The shank 42 is a hollow shank defining an internal aperture. The shank 42 is movable between engaged positions and release positions. More particularly the shank is elastically movable between the engaged positions and the release positions. In the engaged positions, the external threaded portion of the shank cooperates with the internal thread of a blind rivet nut 20. In the engaged portion, there is thus an interference fit between the blind rivet nut 20 and the threaded portion of the shank 42. In the release positions, the threaded portion is adapted to extend at a non-zero distance from the internal thread of the blind rivet nut. In the release positions, the threaded portion can be released or removed from the blind rivet nut 20. There is no interference fit.

The shank 42 comprises a slot 44 which allows the shank to be moved between the release positions and the engaged positions. More particularly, as depicted in the Figures, the shank 42 comprises two slots 44. For instance, the two slots 44 are facing each. The shank thus comprises two latches which are similar. Each of the latches (or half shelves) comprises a segment of the threaded portion, and in the engaged position, the threaded portion allows an engagement with the (internal) thread of the blind rivet nut.

The load assembly 22 further comprises a load pin 46 adapted to extend in the aperture of the shank 42. The load pin 46 is movable in the aperture such as to move the shank 42 between the release positions and the engaged positions. For instance, the release positions of the shank are "rest" positions or positions in which the shank remains when no external constraints apply. The shank 42 is moved to the engaged position by the load pin 46 which extends in the aperture and thus expands the shank 42 and forces the shank 42 in an engaged position. Once the load pin 46 is retracted from the aperture, the shank 42 elastically get back in the release position.

The load pin 46 and the threaded insert 40 are both driven by the linear actuator 16.

The linear actuator 16 is attached to the housing 12. The linear actuator 16 is for instance an electric actuator. However, in other embodiments, the actuator may be for instance pneumatic. The linear actuator comprises a shaft movable along the longitudinal axis in a first direction and in a second direction, the second direction being opposite to the first direction. The linear actuator 16 (and more particularly the shaft 18) cooperates with the load assembly 22. The linear actuator 16 controls the translation of the threaded insert and of the load pin along the longitudinal axis in the first direction and in the second direction. The load pin 46 can also be driven independently of the threaded insert, for example by the same actuator or by a different actuator, for example a pneumatic actuator.

The load assembly 22 is adapted to drive and load a blind rivet nut 20 coming from the feeding assembly 18. More particularly, the feeding assembly 18 comprises a feeding channel 48 adapted to receive a blind rivet nut. The feeding channel extends between a magazine and the nose 14. An end of the feeding channel 48 cooperates with the nose 14 such as to guide a blind rivet nut 20 from the magazine (or any other apparatus adapted to receive a blind rivet nut or a plurality of blind rivet nuts) to the nose 14 of the housing, or more particularly to the receiving portion 26. The feeding assembly 18 can be a pneumatic feeding assembly for the pneumatic feeding of the blind rivet nuts to the nose 14. The feeding channel 48 is shifted with regard to the longitudinal axis X. More particularly, the feeding channel 48 does not need to be aligned with regard to the longitudinal axis. Thus, a side feeding is possible, as depicted in the figures.

The blind rivet nut setting device 10 is adapted to set blind rivet nut in a workpiece 32. More particularly, a workpiece 32 is provided with a through hole 30. The longitudinal axis X of the nose can be centred or aligned with regard to the hole 30. The method to set the blind rivet nut comprises notably the following steps.

In a first step a blind rivet nut 20 is guided through the feeding assembly 18. More particularly, the blind rivet nut 20 is guided through the feeding channel 48. The blind rivet nut 20 comes for instance from a magazine comprising a plurality of blind rivet nuts 20 with a separating unit. The feeding assembly 18 is arranged laterally from the load assembly 22.

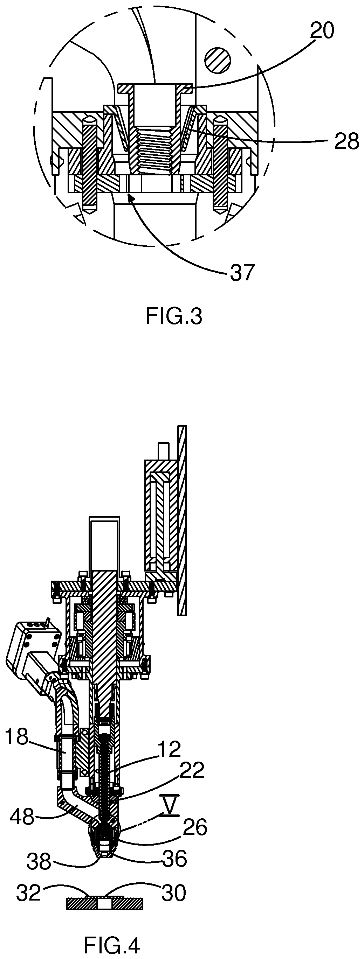

The blind rivet nut 20 is guided through the feeding channel 48 until the end of the channel. The end of the channel cooperates with the nose 14 and the blind rivet nut 20 is thus guided to the nose 14. The blind rivet nut 20 is then received in the receiving portion 26 by the receiving fingers 28, as depicted in Fig. 2 and Fig. 3. More particularly, a portion of the rivet shank can go through the receiving fingers whereas the rivet head (or another portion of the blind rivet nut 20) is retained by the receiving fingers, maintaining thus the blind rivet nut 20 in position and aligned with the longitudinal axis X. The receiving fingers thus guide the blind rivet nut and allow a centering of the blind rivet nut along the longitudinal axis X. In another embodiment (not illustrated), the setting machine could be arranged without any receiving fingers.

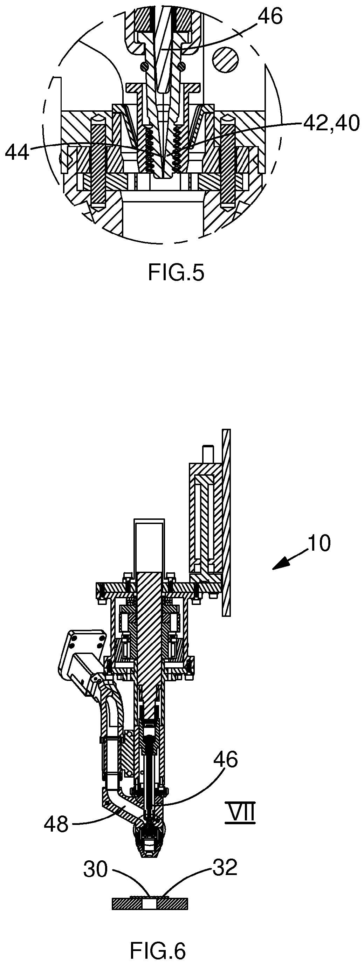

Once the blind rivet nut 20 is in position in the receiving portion 26 (for instance a sensor can be implemented to check the presence of the blind rivet nut in the receiving portion), the linear actuator 16 controls the threaded insert 40 to move the shank 42 in the release position along the longitudinal axis in the first direction such that the shank 42 in the release position is inserted in the blind rivet nut 20, with the external thread portion of the threaded insert 42 facing the internal thread of the blind rivet nut 20, as seen in Fig. 4 and more particularly in Fig. 5. The external and internal thread are not in contact (or slightly in contact), the threaded insert 40 extends with the shank 42 in the release position in the blind rivet nut and the load pin 46 is arranged above the aperture of the shank 42 or at an end of the shank's aperture, such that the load pin 46 does not apply any constraint on the shank and the shank 42 remains in a release position.

Once the external thread portion of the threaded insert 40 faces the internal thread of the blind rivet nut 20, the load pin can be guided by the linear actuator 16 within the aperture such that the load pin 46 applies a constraint to the shank 42 and forces the shank 42 to move from the release position to the engaged position. More particularly, the load pin is inserted in the aperture and forces the shank 42 (or the diameter of the shank 42) to expand. Fig. 6 and more particularly Fig. 7 illustrate the load pin 46 in the aperture forcing the shank 42 in the engaged position. The external threaded portion then engages the internal thread. The threaded insert 40 interferes with the blind rivet nut 20 and is able to guide the blind rivet nut along the longitudinal axis X.

Thus, when the external and internal thread interfere together, the threaded insert 40 can drive the blind rivet nut 20 (and more particularly the rivet head), as shown in Fig. 8, outside the receiving fingers 28, by applying a force in the first direction along the longitudinal axis until the receiving fingers 28 bent and release the blind rivet nut. The blind rivet nut 20 is further driven by the threaded insert through the closure mechanism 37. The threaded insert and the blind rivet nut apply an external load on the closure mechanism 37 such that said closure mechanism opens, as illustrated in Fig. 8.

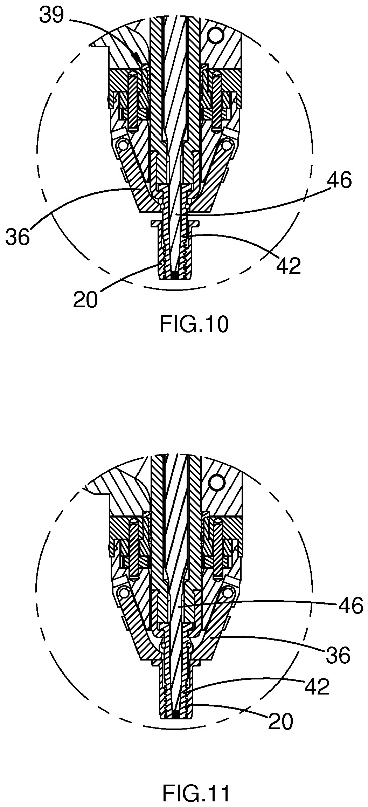

The threaded insert moves further in the first direction such that the blind rivet nut opens the press fingers 36 and emerges from the nose as seen in Fig. 10.

The threaded insert 42 moves slightly back in the second direction such that the rivet head can contact the abutment surface 38 provided on the press fingers 36, as shown in Fig. 11. A flexible guiding sleeve 39 can be provided to guide the load assembly within the setting machine housing.

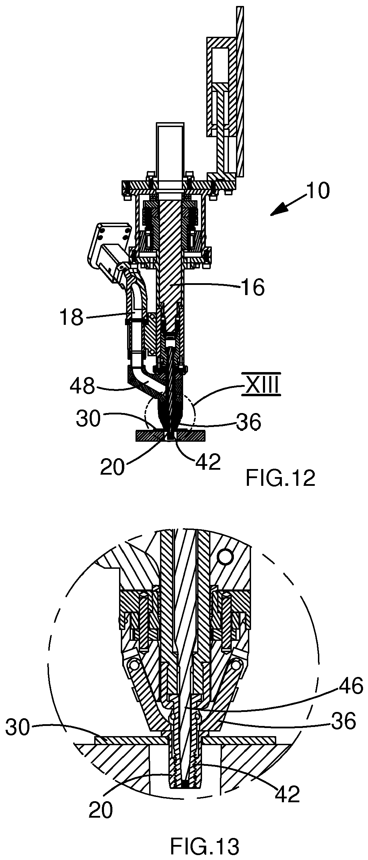

Then, as depicted in Fig. 12 and 13, the nose 14, the threaded insert 40, the load pin 46 and the blind rivet nut 20 are moved toward the hole of the workpiece and the rivet shank is inserted in the hole until the rivet head contacts the surface of the workpiece. For instance, the slide 24 moves the entire unit toward the workpiece 32.

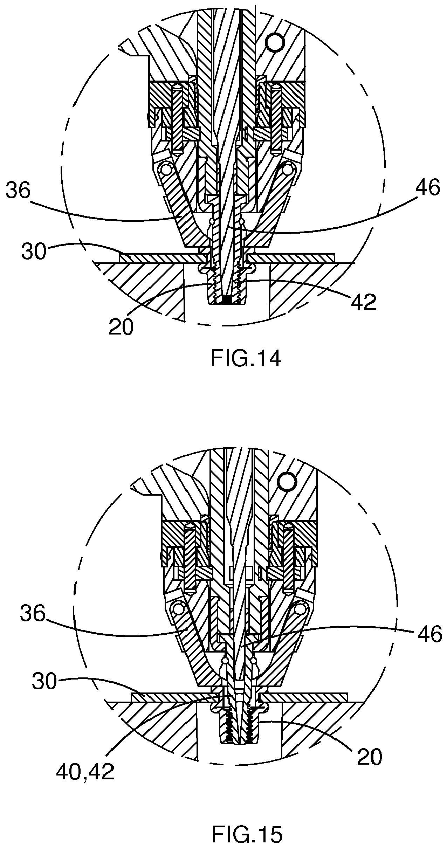

To perform the crimping step, the threaded insert 40 with the shank 42 in the engaged position is moved in the second direction until the rivet shanks form a crimping bulge at the underside of the workpiece 32. The rivet head abuts against the press fingers and the blind rivet nut is maintained in position during the crimping. The blind rivet nut is thus attached to the workpiece, as shown in Fig. 14.

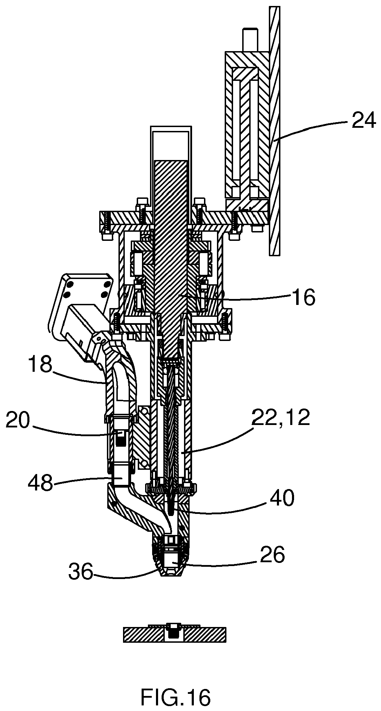

The threaded insert is then removed by first retracting the load pin in the second direction such that the shank moves from an engaged position to a release position, as shown in Fig. 15. Once the shank 42 is in a release position, the threaded insert 40 is retracted from the blind rivet nut and the blind rivet nut setting device is ready for a subsequent setting step with another blind rivet nut, as shown in Fig. 16. The nose 14 is available to receive a new blind rivet nut, with the receiving fingers 28 is their rest position.

## Claims

1. Blind rivet nut setting device (10) comprising:
- a housing (12) having a nose (14) defining a longitudinal axis (X),
- a linear actuator (16) fixed to the housing (12),
- a feeding assembly (18) comprising a feeding channel adapted to receive a blind rivet nut (20) provided with an internal thread, wherein an end of the channel cooperates with the nose,
- a load assembly (22) cooperating with the linear actuator (16), wherein the load assembly extends along the longitudinal axis and is adapted to emerge out of the housing through the nose, wherein the load assembly comprises a threaded insert (40) having a shank (42) with an external threaded portion,
**characterized in that** the shank is a hollow shank defining an internal aperture and the shank is movable between engaged positions and release positions, wherein in the engaged positions the threaded portion is adapted to cooperate with the internal thread of the blind rivet nut (20), wherein in the release positions, the threaded portion is adapted to extend at a non-zero distance from the internal thread of the blind rivet nut and the shank (42) can be removed from the blind rivet nut.

2. Blind rivet nut setting device according to claim 1, wherein the load assembly (22) further comprises a load pin (46) adapted to extend in the aperture of the shank, and wherein the load pin is movable in the aperture such as to move the shank between the release positions and the engaged positions.

3. Blind rivet nut setting device according to claim 2, wherein the load pin (46) and the threaded insert (40) are both driven by the linear actuator.

4. Blind rivet nut setting device according to any of claims 1 to 3, wherein the shank (42) comprises a slot (44) which allows the shank to be moved between the release positions and the engaged positions.

5. Blind rivet nut setting device (10) according to any of the preceding claims, wherein the shank (42) comprises two slots (44) such that the hollow shank is a split hollow shank comprising a first casing and a second casing.

6. Blind rivet nut setting device (10) according to any of claims 1 to 5, wherein the nose (14) comprises a receiving portion (26) provided with receiving fingers (28) equally distributed around the longitudinal axis (X), wherein the receiving fingers are elastic allowing an elastic springback and are adapted to guide the blind rivet nut in the nose to allow the load assembly to cooperate with the blind rivet nut.

7. Blind rivet nut setting device (10) according to any of claims 1 to 6, wherein the nose (14) comprises press fingers (36) adapted to move to release the blind rivet nut, and wherein the press fingers comprise an abutment portion.

8. Blind rivet nut setting device (10) according to any of claims 1 to 7, wherein the nose (14) comprises a closure mechanism (37).

9. Blind rivet nut setting device (10) according to any of claims 1 to 8, wherein the linear actuator (16) comprises a shaft extending along the longitudinal axis, said shaft being movable along the longitudinal axis in a first direction and in a second direction, opposite the first direction, wherein the threaded insert cooperates with the shaft, such that the shaft can drive the threaded insert along the longitudinal axis in the first direction and in the second direction.

10. Blind rivet nut setting device according to any of claims 1 to 9, wherein the feeding channel is shifted from the longitudinal axis (X).

11. Blind rivet nut setting device (10) according to any of claims 1 to 10, wherein the linear actuator (16) is an electric actuator.

12. Method for setting a blind rivet nut (20) in a workpiece (32), comprising:
- providing a bling rivet nut setting device (10) comprising a housing (12) having a nose (14) defining a longitudinal axis (X), a linear actuator (16) fixed to the housing, a feeding assembly comprising a feeding channel, wherein an end of the feeding channel cooperates with the nose, a load assembly cooperating with the linear actuator, wherein the load assembly extends along the longitudinal axis and is adapted to emerges out of the housing through the nose (14), wherein the load assembly comprises a threaded insert having a shank with an external threaded portion, wherein the shank is a hollow shank defining an internal aperture and the shank is elastically movable between engaged positions and release positions;
- providing a blind rivet nut comprising a rivet shank with an internal thread and a rivet head;
- feeding the blind rivet nut in the feeding assembly, such that the blind rivet nut moves through the feeding channel to the nose;
- retaining the blind rivet nut (20) in the nose (14) such that the blind rivet nut (20) is in a loading position;
- guiding the threaded insert (40) with the linear actuator in a first direction along the longitudinal axis (x) into the blind rivet nut (20) with the shank (42) in a release position;
- moving the shank from the release position to an engaged position, such that the threaded portion engages the internal thread;
- guiding the load assembly with the linear actuator further in the first direction along the longitudinal axis such as to release the blind rivet nut from the nose;
- guiding the blind rivet nut with the linear actuator through a hole of a workpiece until the head contacts the workpiece and at least a portion of the shank extends in the hole;
- deforming the blind rivet nut through a displacement of the load assembly in a second direction, opposite the first direction, with the shank in the engaged position such as to perform a crimping process of the blind rivet nut;
- moving the shank from the engaged position to the release position;
- guiding the threaded insert with the linear actuator in the second direction along the longitudinal axis to release the blind rivet nut from the threaded insert.

13. Method according to claim 13, wherein the nose (14) comprises press fingers (28) and the method further comprises a step of preloading the blind rivet nut against the press fingers in order to ensure a defined starting position for deforming the blind rivet nut.

14. Method according to claim 13, wherein the load assembly further comprises a load pin (46), wherein the load pin cooperates with the threaded insert and extends in the aperture of the shank to move the shank from a release position to an engaged position.

15. Method according to claim 14, further comprising a step of guiding the load pin in the first direction along the longitudinal axis (X) within the aperture of the shank (42) and a step of guiding the load pin (46) in the second direction along the longitudinal axis outside of the aperture.
